# EUROPEAN PATENT SPECIFICATION

(11) **EP 1 082 627 B1**
(45) Date of publication and mention of the grant of the patent: **26.03.2003**
(21) Application number: 99924590.5
(22) Date of filing: 28.05.1999
(51) Int. Cl.: G02B 6/10, G02B 5/28

(54) **CONTROLLED PHASE DELAY BETWEEN BEAMS FOR WRITING BRAGG GRATINGS**
KONTROLLIERTER PHASENUNTERSCHIED ZWISCHEN ZWEI LICHTWELLEN ZUM SCHREIBEN VON BRAGG-GITTERN
REGULATION DU TEMPS DE PROPAGATION DE PHASE SEPARANT DES FAISCEAUX POUR INSCRIPTION SUR DES RESEAUX DE BRAGG

(30) Priority: 29.05.1998 AU PP381698
(43) Date of publication of application: 14.03.2001
(73) Proprietor: THE UNIVERSITY OF SYDNEY, Sydney, New South Wales 2006 (AU)
(72) Inventor: STEPANOV, Dmitrii, Dulwich Hill, NSW 2203 (AU); SCEATS, Mark, Lilyfield, NSW 2040 (AU)
(74) Representative: Kuhnen & Wacker
(86) International application number: PCT/AU99/00417
(87) International publication number: WO 99/063371

(56) References cited:
- EP-A- 0 843 186
- WO-A-96/36895
- WO-A-97/21120
- WO-A-97/22023
- WO-A-97/26570
- DE-C- 19 605 062
- FR-A- 2 768 819
- US-A- 5 066 133
- US-A- 5 388 173

## Description

### Field of the Invention

The present invention relates to the field of constructing Bragg gratings or the like in UV or like photosensitive waveguides utilizing a UV or like interference pattern.

### Background of the Invention

The present invention is directed to writing gratings or other structures in a photosensitive optical waveguide. The creation of a grating utilizing the interference pattern from two interfering coherent UV beams is well known. This technique for construction of Bragg gratings is fully described in US Patent No. 4,725,110 issued to W H Glenn et. al. and US Patent No. 4,807,950 issued to W H Glenn et. al.

Bragg grating structures have become increasingly useful and the demand for longer and longer grating structures having higher and higher quality properties has lead to the general need to create improved grating structures.

### Summary of the Invention

In accordance with a first aspect of the present invention, there is provided a method of writing an extended grating structure in a photosensitive waveguide utilizing at least two overlapping beams of light to form an interference pattern, the method comprising the steps of moving the waveguide through the interference pattern; and simultaneously controlling a relative phase delay between the beams utilising a phase modulator, thereby controlling the positions of maxima within the interference pattern, wherein the phase modulator does not comprise a mechanical means for effecting the phase modulation.

The modulator can comprise one of an electo-optic phase modulator, a magneto-optic phase modulator, a frequency shifter or other form of controllable optical retarder.

The at least two overlapping beams can be formed by the splitting of a single coherent beam of light.

The step of controlling the relative phase delay can be performed before the splitting, after the splitting, or in the process of splitting the single coherent beam.

The method can further comprise the step of reflecting said beams around an optical circuit comprising a series of reflection elements for overlapping the beams to form the interference pattern.

The method can further comprise the step of utilising a feedback loop in controlling the phase delay to improve the noise properties of the extended grating structure. The feedback loop may comprise an opto-electronic feedback loop.

The grating structure can comprise a chirped, and or apodized grating. The grating can have a predetermined strength, and/or period and/or phase profile.

In an embodiment, the beams can comprise substantially orthogonal polarization states and the modulator modulates the relative phase delay between the polarization states and the polarization states are preferably aligned subsequent to the modulation.

### Brief Description of the Drawings

Notwithstanding any other forms which may fall within the scope of the present invention, preferred forms of the invention will now be described, by way of example only, with reference to the accompanying drawings in which:
Fig. 1 illustrates schematically a first embodiment of the present invention;
Fig. 2 illustrates one form of driving of the electro-optic modulator in accordance with the principles of the present invention;
Fig. 3 illustrates an alternative embodiment of the present invention; and
Fig. 4 illustrates a further alternative embodiment of the present invention;

### Description of Preferred and Other Embodiments

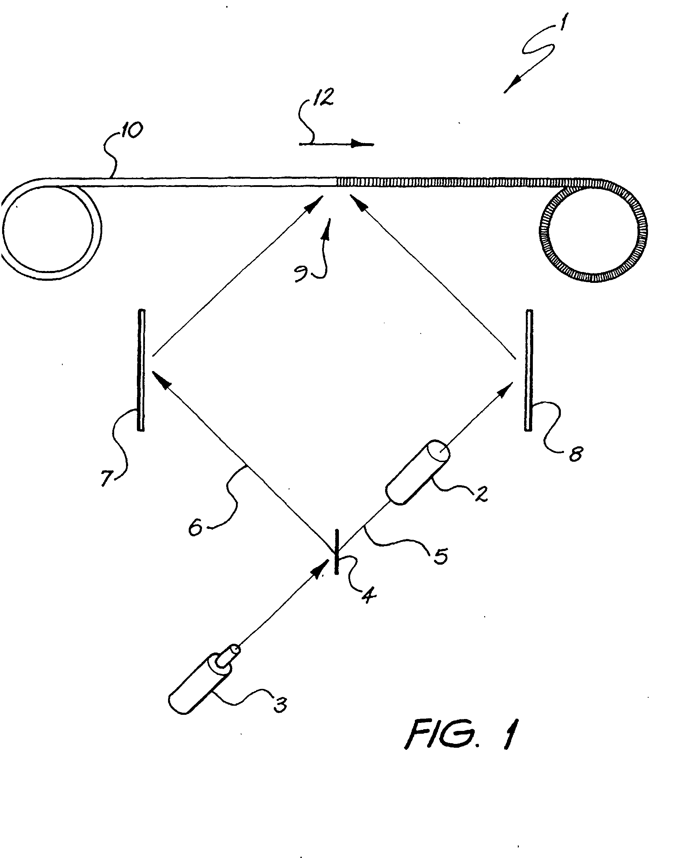

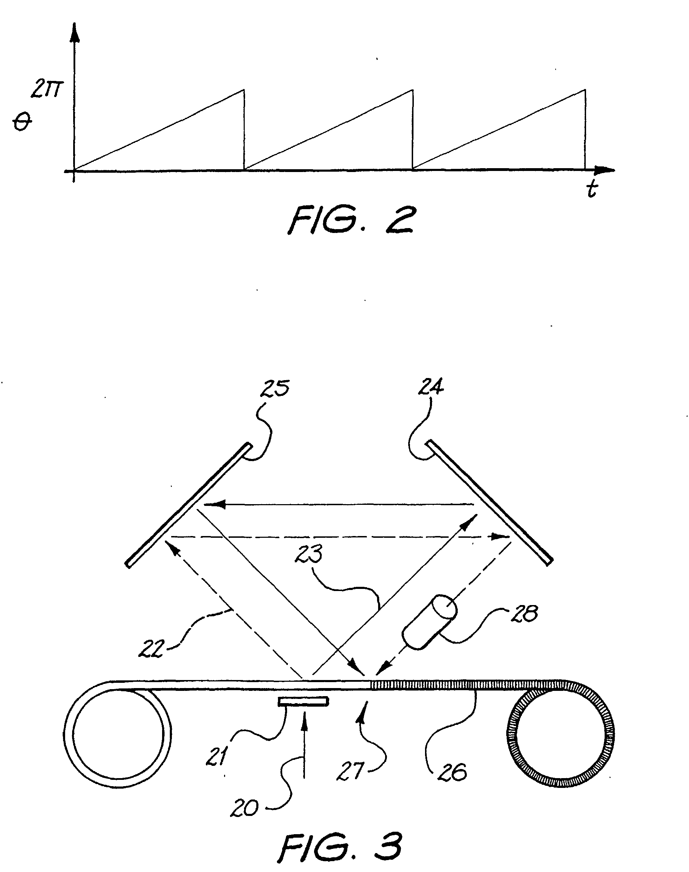

Turning initially to Fig. 1, there is illustrated the arrangement 1 of a preferred embodiment which is similar to the aforementioned arrangement of Glenn et. al. with the additional inclusion of an optical phase modulating element 2. The basic operation of the arrangement of Fig. 1 is that a UV source 3 undergoes beam splitting by beamsplitter 4 so as to form two coherent beams 5, 6. A phase mask placed appropriately into the setup can be used to split the beam. Each beam is reflected by a suitably positioned mirror eg. 7, 8 so that the beams interfere in the region 9. In this region, there is placed a photosensitive optical waveguide 10 on which an extended grating structure is to be written. The essence of the preferred embodiment is to utilize the phase modulator 2 so as to modulate the relative phase difference between the two beams 5, 6 at the point of interference 9 such that the interference pattern remains static in the reference frame of the optical waveguide 10 as the waveguide is moved generally in the direction 12. The phase modulator 2 can be an electro-optic modulator of a known type including an ADP, KD*P,BB0 crystal type transparent at the UV source wavelength. Suitable electro-optic crystals are available from many optical components manufacturers including Leysop Limited under the model numbers EM200A and EM200K. The modulator operates so as to provide for a controlled phase delay of the beam 5 relative to the beam 6. In a first example, the control is achieved by setting the level of an input signal given the fibre 10 is moving at a constant velocity. The input signal in this case can comprise a saw tooth wave form as illustrated in Fig. 2, the maximum saw tooth magnitude being set to be equivalent to a 2π phase delay. The slope of the saw tooth wave form is set so as to closely match the velocity of the changing maxima of the interference pattern to that of the fibre 10.

Hence, prior known mechanical methods of movement of any portion of the apparatus is dispensed with and long or stitched interference patterns can be obtained through the utilization of the phase modulating device 2 to introduce the required optical phase difference between the interfering UV beams 5 and 6. As the phase is invariant with respect to a 2π change, there is no need to introduce large phase differences thus limiting the required amplitude of the phase change to 2π and allowing it to operate near the balance point of the interferometer. The electro-optically induced phase change will make the interference pattern move along the fibre as the fibre itself moves and the direction and velocity of the move can be set in accordance with requirements. The saw tooth wave form achieving the effect of "running lights''.

Electro-optic modulators such as those aforementioned can operate with very low response time and extremely high cut off frequencies. Hence, the saw tooth edge fall can be practically invisible and a near perfect stitch can be achieved. At 6mm per minute scanning speed, the modulation frequency can be about 200Hz.

Further, by applying a differential velocity between the fibre and the pattern or through appropriate control of the phase delay, a wavelength shift with respect to the static case can be obtained. An acceleration or appropriate control of the phase delay can be used to produce a chirp and so on. Apodisation can also be provided by proper additional modulation of the electro-optic modulator.

The embodiment described has an advantage of having all optical elements static except for the moving fibre. Therefore, it allows for focussing of the interfering beams tightly onto the fibre and achieving spatial resolution reaching fundamental limits (of the order of the UV writing wavelength, the practical limit being the fibre core diameter). The static interferometer arrangement itself leads to reduced phase and amplitude noise of the interference pattern. Additionally, the ability to control the phase and amplitude of the pattern using a feedback loop provides a means to improve the noise properties of the interferometer substantially.

A number of further refinements are possible. For example, in order to accurately match the velocity of the fibre 10 and the electro-optic modulator frequency, a simple scanning Fabry-Perot interferometric sensor can be used to measure the relative positions of the fibre and the interference pattern 9. A high finesse (F) resonator can be used to achieve the accuracy of distance measurements much better than the wavelength of the narrow line width source which would be employed in the sensor.

By scanning the Fabry-Perot at a constant rate or sweeping the laser frequency the position can be precisely (1/2F) determined. To increase the resolution further a conversion of the interferometer into a laser at threshold may be needed. In this case the finesse F of the cavity is close to infinity and the resolution is enhanced. Other types of interferometric sensors such as a Michelson interferometer can be used to accurately determine the fibre position with respect to the interference pattern.

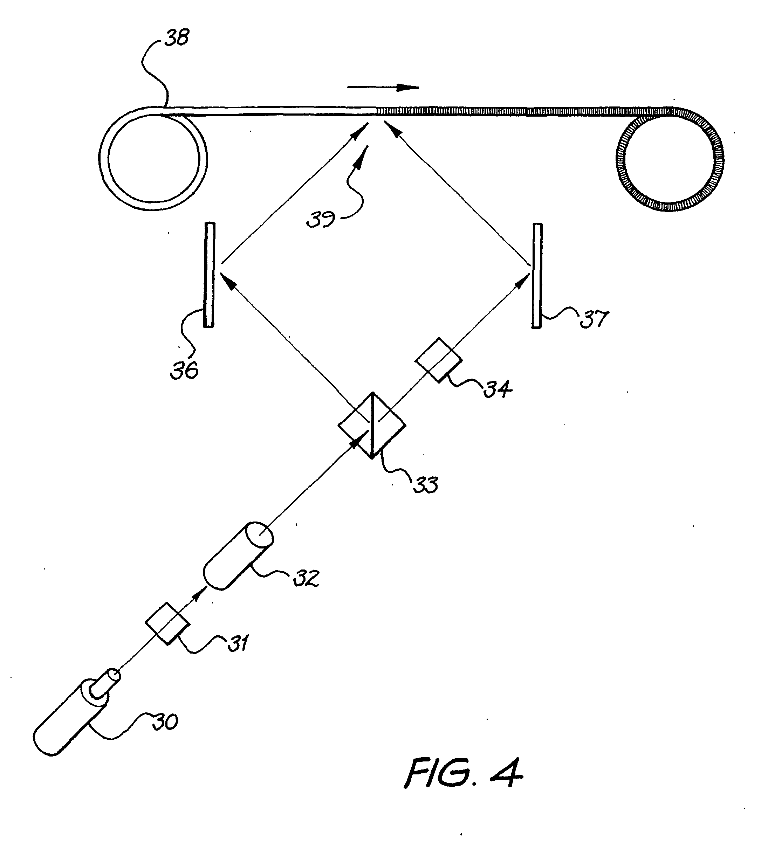

Of course, other arrangements utilizing this principle are possible. For example, the teachings of PCT patent application No. PCT/AU96/00782 by Ouellette et. al. discloses an improved low noise sensitivity inteferometric arrangement which operates on a "sagnac loop'' type arrangement. Turning now to Fig. 3 there is illustrated a modified form of the Ouellette arrangement to incorporate the principles of the present invention. In this modified form, an initial input UV beam 20 is diffracted by phase mask 21 so as to produce two output beams 22, 23. The beam 23 is reflected by mirrors 24, 25 so as to fall upon the fibre 26 in the area 27. Similarly, beam 22 is reflected by mirror 25 and mirror 24 before passing through an electro-optic modulator 28 which modifies the phase of the beam relative to the beam 23. The two beams interfere in the area 27. The phase of the interference patterns can be controlled by the modulator 28 in the same manner as the aforementioned. In this manner, the advantages of the previous Ouellette arrangement can be utilized in a stable mechanical arrangement in that it is not necessary to sweep the beam across the phase mask 21 or perform any other movements other than the electrical modulation of the modulator element 28 whilst forming an extended grating structure. Moreover, the interferometer can be adjusted to operate near its balance point and a low coherence length UV source can be used in the arrangement.

Further, a phase modulator based on a magneto-optic effect could be used instead of an electro-optic modulator. In the Sagnac interferometer arrangement, it can be placed such that both of the interfering beams pass the Faraday cell in opposite directions such that a non-reciprocal controlled relative phase delay is introduced between the counter propagating beams.

Turning now to Fig. 4 there is illustrated an alternative arrangement to incorporate the principles of the present invention. In this arrangement, the output from a UV laser 30 is initially linearly polarized 31 before passing through an electro-optic modulator 32 which modifies the polarization state of the beam. The polarization plane of the UV beam with respect to the birefringent axes of the electro-optic modulator 32 is such that two orthogonal polarization eigenstates with equal intensities propagate in the modulator, with one of the eigenstates being phase modulated while the other one being not. The arrangement uses polarization beam splitter 33 to separate the polarization states and half-wave plate 34 is used to 90 degree rotate the polarization of one of the resulting beams to allow for the interference taking place between the beams. The beams are further reflected by mirrors 36 and 37 so as to fall upon the fibre 38 in the area 39 to produce an interference pattern in conjunction with movement of the fibre 38. The phase of the interference pattern can be controlled by the modulator 32 in the same manner as the aforementioned to produce an extended grating structure.

In a further alternative embodiment, a travelling wave acousto-optic (AO) modulator transparent at the wavelength of the UV source 3 can be used as a modulating element 2 to frequency shift the diffracted light. The interference between the two beams at different frequencies in region 9 will result in a interference pattern travelling at a velocity v = -Δν•Λ/2. For example, for Δν=200 Hz frequency shift and Λ=1µm interference pattern period the velocity of the pattern is v=6mm/min and the optical waveguide 10 should be translated at this speed in the same direction. No special modulation waveforms need to be applied in this case, with the control parameter being the frequency shift. As most commercial acousto-optic modulators operate in a MHz range, a frequency shift of the second interfering beam may be required to achieve the differential frequency shift in the Hz - kHz range. There may be also need for a minor adjustment compared to the electro-optic modulator arrangement of Fig. 1 as the Bragg angle will vary with the frequency of the applied to the AO modulator signal resulting in a displacement of the diffracted beam. However the effect of this displacement can be reduced by making the setup compact. There could also be a further adjustment since AO modulators may exhibit resonances.

In a modified embodiment, an optical phase mask, optical wedge or an optical waveplate can be utilized. The optical phase mask can also have a function of the beamsplitter. The embodiment utilizing the phase mask works for all known phase-mask based interferometer arrangements, such as phase mask direct writing technique, or for a Sagnac interferometer writing technique (such as that due to Ouellette disclosed on PCT application number PCT/AU96/00782) or when utilizing the aforementioned system due to Glenn et. al.

It would be appreciated by a person skilled in the art that numerous variations and/or modifications may be made to the present invention as shown in the specific embodiments without departing from the scope of the invention as broadly described. The present embodiments are, therefore, to be considered in all respects to be illustrative and not restrictive.

## Claims

1. A method of writing an extended grating structure in a photosensitive waveguide comprising the steps of:
- utilizing at least two overlapping beams of light to form an interference pattern;
- moving the waveguide through the interference pattern; and
simultaneously controlling a relative phase delay between the beams utilising a phase modulator, thereby controlling the positions of maxima within the interference pattern, wherein the phase modulator does not comprise a mechanical means for effecting the phase modulation.

2. A method as claimed in claim 1, wherein the at least two overlapping beams are formed by the splitting of a single coherent beam of light.

3. A method as claimed in claims 1 or 2, wherein the step of controlling the relative phase delay is performed before the splitting of the single coherent beam.

4. A method as claimed in claim 2, wherein the step of controlling the relative phase delay is performed after the splitting of the single coherent beam.

5. A method as claimed in claim 2, wherein the step of controlling the relative phase delay is performed in the process of splitting the single coherent beam.

6. A method as claimed in any one of the preceding claims, wherein said modulator comprises an electro-optic phase modulator.

7. A method as claimed in any one of claims 1 to 5, wherein said modulator comprises a magneto-optic phase modulator.

8. A method as claimed in any one of claims 1 to 5, wherein said modulator is a frequency shifter.

9. A method as claimed in claim 8, wherein the frequency shifter comprises an acousto-optic frequency shifter.

10. A method as claimed in any one of claims 1 to 4, wherein the modulator comprises a controllable optical retarder or optical delay line.

11. A method as claimed in claim 2, wherein the method further comprises the step of reflecting said beams around an optical circuit comprising a series of reflection elements for overlapping the beams to form the interference pattern.

12. A method as claimed in any one of the preceding claims further comprising utilising a feedback loop in controlling the phase delay to improve the noise properties of the extended grating structure.

13. A method as claimed in claim 12, wherein the feedback loop comprises an opto-electronic feedback loop.

14. A method as claimed in any one of the preceding claims, wherein the grating structure comprises a chirped grating.

15. A method as claimed in any one of the preceding claims, wherein the grating structure comprises an apodized grating.

16. A method as claimed in any one of the preceding claims, wherein the grating structure has a predetermined strength profile.

17. A method as claimed in any one of the preceding claims, wherein the grating structure has a predetermined period profile.

18. A method as claimed in any one of the preceding claims, wherein the grating structure has a predetermined phase profile.

19. A method as claimed in any one of the preceding claims, wherein the beams have substantially orthogonal polarization states and wherein the modulator modulates the relative phase delay between the polarization states and wherein the method further comprises the step of aligning the polarization states subsequent to modulating the relative phase delay.

## Patentansprüche

1. Verfahren zum Schreiben einer erweiterten Gitterstruktur in einem photosensitiven Wellenleiter, mit den Schritten:
- Nutzen von wenigstens zwei überlappenden Lichtbündeln, um ein Interferenzmuster zu bilden;
- Bewegen des Wellenleiters durch das Interferenzmuster; und
- gleichzeitiges Steuern einer relativen Phasenverzögerung zwischen den Bündeln unter Nutzung eines Phasenmodulators, und hierdurch Steuern der Positionen der Maximas innerhalb des Interferenzmusters, wobei der Phasenmodulator keine mechanische Einrichtung zur Bewirkung der Phasenmodulation enthält.

2. Verfahren nach Anspruch 1, wobei die wenigstens zwei überlappenden Bündel durch das Teilen eines einzelnen kohärenten Lichtbündels gebildet werden.

3. Verfahren nach Anspruch 1 oder 2, wobei der Schritt der Steuerung der relativen Phasenverzögerung vor dem Teilen des einzelnen kohärenten Bündels ausgeführt wird.

4. Verfahren nach Anspruch 2, wobei der Schritt der Steuerung der relativen Phasenverzögerung nach dem Teilen des einzelnen kohärenten Bündels ausgeführt wird.

5. Verfahren nach Anspruch 2, wobei der Schritt der Steuerung der relativen Phasenverzögerung beim Teilen des einzelnen kohärenten Bündels ausgeführt wird.

6. Verfahren nach einem der vorangegangen Ansprüche, wobei der Modulator einen elektrooptischen Phasenmodulator enthält.

7. Verfahren nach einem der Ansprüche 1 bis 5, wobei der Modulator einen magnetooptischen Phasenmodulator enthält.

8. Verfahren nach einem der Ansprüche 1 bis 5, wobei der Modulator ein Frequenzschieber ist.

9. Verfahren nach Anspruch 8, wobei der Frequenzschieber einen akustooptischen Frequenzschieber enthält.

10. Verfahren nach einem der Ansprüche 1 bis 4, wobei der Modulator ein steuerbares optisches Verzögerungsglied bzw. eine optische Verzögerungsleitung enthält.

11. Verfahren nach Anspruch 2, wobei das Verfahren ferner den Schritt der Reflektion des Bündels um einen optischen Kreis enthält, welcher eine Reihe von Reflektionselementen zum Überlappen der Bündel aufweist, um das Interferenzmuster zu bilden.

12. Verfahren nach einem der vorangegangenen Ansprüche, ferner mit der Nutzung einer Rückkopplungsschleife bei der Steuerung der Phasenverzögerung, um die Störungseigenschaften der erweiterten Gitterstruktur zu verbessern.

13. Verfahren nach Anspruch 12, wobei die Rückkopplungsschleife eine optoelektronische Rückkopplungsschleife enthält.

14. Verfahren nach einem der vorangegangenen Ansprüche, wobei die Gitterstruktur ein gechirptes Gitter enthält.

15. Verfahren nach einem der vorangegangenen Ansprüche, wobei die Gitterstruktur ein apodisiertes Gitter enthält.

16. Verfahren nach einem der vorangegangenen Ansprüche, wobei die Gitterstruktur ein vorbestimmtes Stärkeprofil aufweist.

17. Verfahren nach einem der vorangegangenen Ansprüche, wobei die Gitterstruktur ein vorbestimmtes Zeitintervallprofil aufweist.

18. Verfahren nach einem der vorangegangenen Ansprüche, wobei die Gitterstruktur ein vorbestimmtes Phasenprofil aufweist.

19. Verfahren nach einem der vorangegangenen Ansprüche, wobei die Bündel im wesentlichen orthogonale Polarisationszustände aufweisen, wobei der Modulator die relative Phasenverzögerung zwischen den Polarisationszuständen moduliert, und wobei das Verfahren ferner den Schritt der Ausrichtung der Polarisationszustände nachfolgend zur Modulation der relativen Phasenverzögerung enthält.

## Revendications

1. Procédé d'inscription d'une structure étendue en réseau dans un guide d'ondes photosensible, comprenant les étapes consistant à :
- utiliser au moins deux faisceaux lumineux se recouvrant pour former des franges d'interférences ;
- déplacer le guide d'ondes dans les franges d'interférences ; et
- réguler simultanément un temps de propagation de phase relative entre les faisceaux en utilisant un modulateur de phase, régulant ainsi les positions de maxima à l'intérieur des franges d'interférences, dans lequel le modulateur de phase ne comprend pas de moyen mécanique pour réaliser la modulation de phase.

2. Procédé selon la revendication 1, dans lequel les, au moins deux, faisceaux se recouvrant sont formés par la division d'un faisceau lumineux cohérent unique.

3. Procédé selon la revendication 1 ou 2, dans lequel l'étape consistant à réguler le temps de propagation de phase relative est réalisée avant la division du faisceau cohérent unique.

4. Procédé selon la revendication 2, dans lequel l'étape consistant à réguler le temps de propagation de phase relative est réalisée après la division du faisceau cohérent unique.

5. Procédé selon la revendication 2, dans lequel l'étape consistant à réguler le temps de propagation de phase relative est réalisée dans le processus de division du faisceau cohérent unique.

6. Procédé selon l'une quelconque des revendications précédentes, dans lequel ledit modulateur comprend un modulateur de phase électro-optique.

7. Procédé selon l'une quelconque des revendications 1 à 5, dans lequel ledit modulateur comprend un modulateur de phase magnéto-optique.

8. Procédé selon l'une quelconque des revendications 1 à 5, dans lequel ledit modulateur est un changeur de fréquence.

9. Procédé selon la revendication 8, dans lequel le changeur de fréquence comprend un changeur de fréquence acousto-optique.

10. Procédé selon l'une quelconque des revendications 1 à 4, dans lequel le modulateur comprend un ralentisseur optique réglable ou une ligne à retard optique.

11. Procédé selon la revendication 2, dans lequel le procédé comprend en outre l'étape consistant à réfléchir lesdits faisceaux autour d'un circuit optique comprenant une série d'éléments réflecteurs pour recouvrement des faisceaux afin de former les franges d'interférences.

12. Procédé selon l'une quelconque des revendications précédentes, comprenant en outre l'utilisation d'une boucle de contre-réaction pour réguler le temps de propagation de phase afin d'améliorer les caractéristiques de bruit de la structure étendue en réseau.

13. Procédé selon la revendication 12, dans lequel la boucle de contre-réaction comprend une boucle de contre-réaction opto-électronique.

14. Procédé selon l'une quelconque des revendications précédentes, dans lequel la structure à réseau comprend un réseau dispersif.

15. Procédé selon l'une quelconque des revendications précédentes, dans lequel la structure à réseau comprend un réseau apodisé.

16. Procédé selon l'une quelconque des revendications précédentes, dans lequel la structure à réseau a un profil de résistance prédéterminé.

17. Procédé selon l'une quelconque des revendications précédentes, dans lequel la structure à réseau a un profil de période prédéterminé.

18. Procédé selon l'une quelconque des revendications précédentes, dans lequel la structure à réseau a un profil de phase prédéterminé.

19. Procédé selon l'une quelconque des revendications précédentes, dans lequel les faisceaux ont des états de polarisation substantiellement orthogonaux et dans lequel le modulateur module le temps de propagation de phase relative entre les états de polarisation et dans lequel le procédé comprend en outre l'étape consistant à aligner les états de polarisation suivants après la modulation du temps de propagation de phase relative.
